(19) **Europäisches Patentamt**

**European Patent Office**

**Office européen des brevets**

(11) **EP 0 791 267 B1**

(12) **EUROPEAN PATENT SPECIFICATION**

(45) Date of publication and mention
of the grant of the patent:
**07.02.2001 Bulletin 2001/06**

(21) Application number: **94928831.0**

(22) Date of filing: **16.09.1994**

(51) Int Cl.⁷: **H04N 1/60**

(86) International application number:
**PCT/EP94/03228**

(87) International publication number:
**WO 96/08914 (21.03.1996 Gazette 1996/13)**

(54) **HSL CORRECTIONS IN CMY COLOR SPACE**

HSL KORREKTUREN EINEM CMY FARBRAUM

CORRECTIONS DE TEINTE, SATURATION ET LUMINANCE DANS UN ESPACE DE COULEURS CMJ

(84) Designated Contracting States:
**DE FR GB IT**

(43) Date of publication of application:
**27.08.1997 Bulletin 1997/35**

(73) Proprietor: **Heidelberger Druckmaschinen Aktiengesellschaft**
**69115 Heidelberg (DE)**

(72) Inventor: **DICHTER, Wilhelm**
**Tewksbury, MA 01876 (US)**

(56) References cited:
**EP-A- 0 267 566          EP-A- 0 506 144**

**Description**

## BACKGROUND OF THE INVENTION

The present invention relates to color manipulation for digital image processing in the prepress industry. Human perception of color changes described in terms of a CMY (cyan, magenta, yellow) color space is not intuitive. Traditional color manipulation requires the color changes to be specified in abstract CMY percentages. Some fundamental color manipulations, e.g. brightening, saturating and turning a "color wheel", cannot be defined in these terms.

Stated differently, when you change one or more of the colors C, M, Y, and K, the resultant color change is not normally humanly predictable, since colors result which are unexpected, based on human experience.

As a result, it has required highly trained operators involved in the pre-press industry to know what color will result when various changes are effected in C, M, Y, and K.

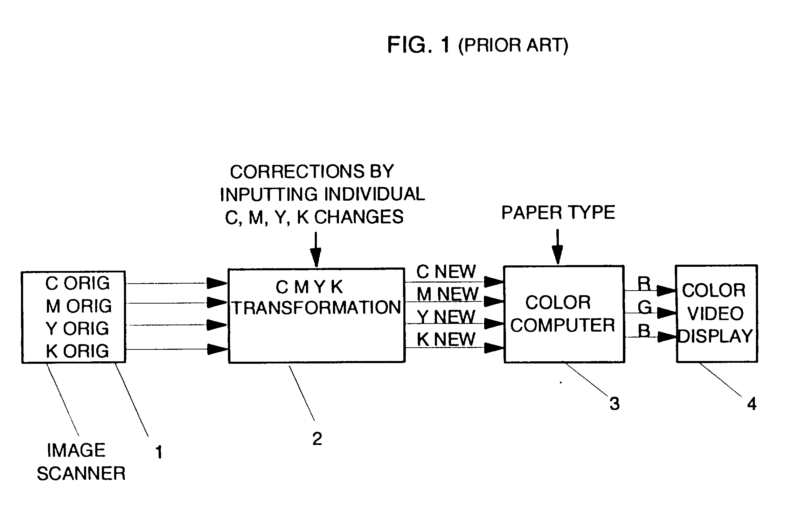

In a first prior art system and method as shown in Fig. 1, an image scanner 1 outputs $C_{orig}$, $M_{orig}$, $Y_{orig}$, and $K_{orig}$ color signal values, derived by scanning an original image, to a computer or hardware circuit 2 which performs a CMYK transformation to create new color values $C_{new}$, $M_{new}$, $Y_{new}$, and $K_{new}$. Here an operator inputs desired corrections to the image by inputting individual C, M, Y, and K changes. In other words, a specific change for $C_{orig}$ to $C_{new}$ is input independently of changes for the other three colors. The new color values $C_{new}$, $M_{new}$, $Y_{new}$, and $K_{new}$ are then input to a color computer which takes into account the paper type on which the image is to be eventually printed. This is necessary since various paper types have various effects on the resulting color of inks when the inks are applied to the paper. The color computer also converts the $C_{new}$, $M_{new}$, $Y_{new}$, and $K_{new}$ values to R, G, B, video signals and then inputs the color video signals to a well known color video display 4. As a result, the operator can see on the color video display 4 a true rendition of the colors as they will be printed on the paper, but after the corrections have been input. Thus, the operator can see precisely how the image will appear later in print.

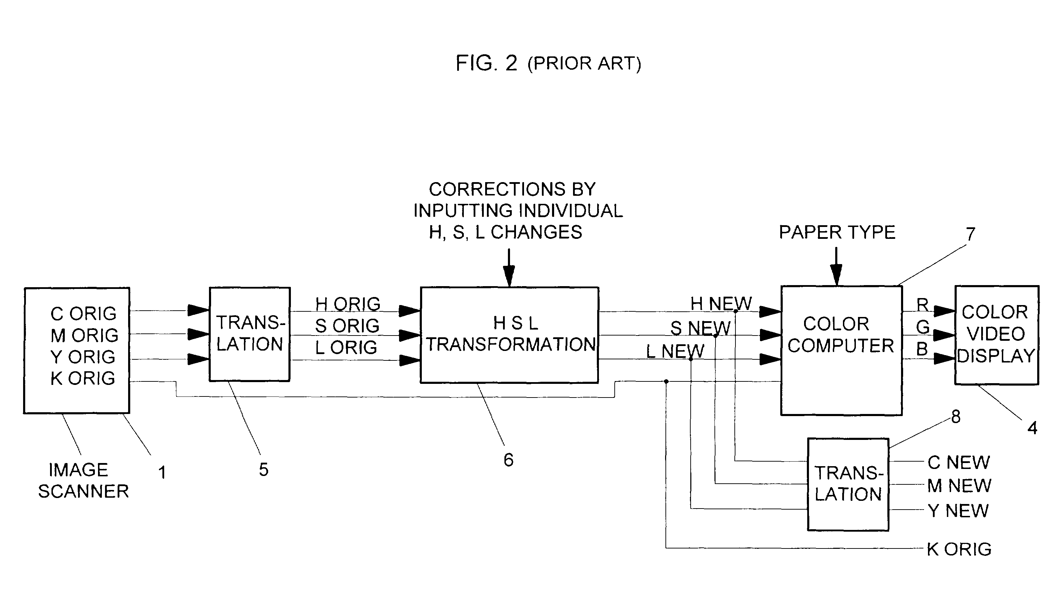

A problem with this approach shown in Fig. 1 is that it requires a highly trained operator to know how the change input for one of the colors C, M, Y, and K will affect the overall result in terms of hue, saturation, and luminance. Thus, the prior art technique in Fig. 1 is laborious and time consuming and requires highly trained operators. A second prior art approach is shown in Fig. 2.

As a result of attempts to introduce more intuitive color manipulation, HSL (Hue, Saturation, Luminance) changes are executed in three steps. In a first step, the original image from scanner 1 is translated by translation 5 from the printable CMY color space to the HSL (or equivalent) color space, which is unprintable but convenient for calculation. In a second step, the HSL changes are applied in an HSL transformation 6 according to a binary mask and are executed in a new color space. In a third step, the new image is translated by translation 8 back to the printable color space.

$$(CMY)_{original} \Rightarrow \text{color space translation} \Rightarrow [HSL \text{ (or equivalent)}]_{original}$$

$$[HSL(\text{or equivalent})]_{original} \Rightarrow HSL \text{ change} \Rightarrow [HSL(\text{or equivalent})]_{new}$$

$$[HSL(\text{or equivalent})_{new} \Rightarrow \text{color space translation} \Rightarrow (CMY)_{new}$$

In this approach shown in Fig. 2, it is difficult to: 1 ) accomplish quality translations between color spaces; 2) meet precision requirements; 3) decide how to treat unprintable colors; 4) achieve interactive performance; 5) avoid the undesirable effects of binary weighting ; and 6) the new color values resulting from corrections, namely $C_{new}$, $M_{new}$, $Y_{new}$, and $K_{new}$ may lie outside the color space and be impossible to print, even though the colors have been properly rendered on the video display.

## SUMMARY OF THE INVENTION

It is an object of the invention to improve over the prior art system shown in Figure 1 such that changes which are instituted are clamped into the available color space so that new CMYK color values do not result which cannot be printed, even though they are properly viewed on the display screen.

It is a further object to provide a method which is an improvement over the prior art shown in Figure 2 by eliminating the need for translations first from CMYK to HSL and later from HSL back to CMYK for printing.

According to the invention, color manipulation is simpler and more natural when done by hue, saturation, and luminance adjustments. Furthermore, there are advantages to maintaining images in the printable CMY color space during color manipulation. With the method of the invention, original CMYK color values or printing colors are transformed to new CMYK printing colors having corrections desired by an operator. The operator inputs the desired corrections by defined HSL changes. First the original CMYK printing colors are provided. The CMY colors are then corrected by defining the desired corrections in terms of corresponding HSL changes. These HSL changes are then used to transform the original CMY printing colors to new CMY printing colors by use of the HSL changes, but without the need for a color space translation. Preferably, with the invention the transformation occurs in the original CMYK printing color space by identifying the gray line thereof, and executing the HSL changes with respect to the gray line.

With the invention, hue, saturation and luminance changes are applied directly to the CMY colors and are executed smoothly in the CMY color space according to a weighted mask. Both original and new images are maintained in the same printable CMY color space. The hue, saturation and luminance changes are executed with respect to the gray line rather than the color cube diagonal. The gray line extends nonlinearly throughout the CMY color space. The hue, saturation and luminance changes are executed in one step without the color space translations. All calculations are based on the original image and are performed on a pixel by pixel basis.

**BRIEF DESCRIPTION OF THE DRAWINGS**

Figure 1     is a block diagram illustrating a first prior art technique for correcting original CMYK colors and displaying them on a color video display;

Figure 2     is a block diagram of another prior art technique wherein HSL values are employed in an HSL transformation to input desired corrections, and then displaying the corrected values by RGB video signals on a color video display;

Figure 3     is a block diagram showing the method and system of the invention wherein corrections are entered by HSL changes without the need for translations;

Figure 4     illustrates hue change H in the CMY color space according to the invention;

Figure 5     illustrates saturation change S in the CMY color space according to the invention; and

Figure 6     illustrates luminance change L in the CMY color space according to the invention.

**DESCRIPTION OF THE PREFERRED EMBODIMENTS**

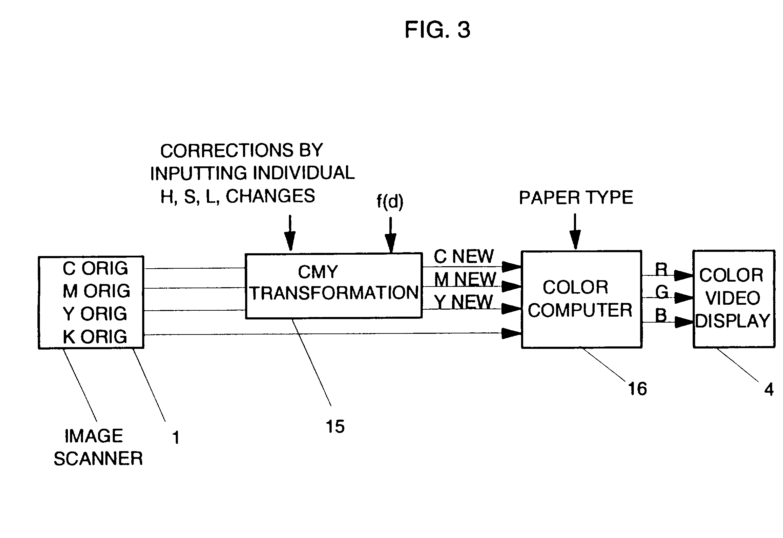

The inventive method and system is shown in the block diagram of Figure 3. Here an image scanner 1 outputs original color values CMYK. The CMY original values are input to a CMY transformation 15. Here, corrections desired by the operator of the system, for example to the hue, saturation, or luminance of various portions of the original image, are entered in terms of H, S, and L changes at the CMY transformation 15. As a result, new values $C_{new}$, $M_{new}$, and $Y_{new}$ are output to the color computer 16. The specific mathematics employed for the CMY transformation are described in detail hereafter. Also input at the CMY transformation 15 is a weighting function f(d) described hereafter.

The new CMY values together with the original K value are then input to the color computer 16 together with the paper type as explained previously, The color computer in accordance with the known prior art then creates R, G, B video signals for driving the color video display 4 in well known prior art manner. The image which is displayed on the color video display 4 is an accurate rendition of how the image after correction will appear when printed.

As can be seen in Figure 3, translations are avoided. Thus, the undesirable effects resulting from translations, such as time delay and errors are avoided. Equipment expense is also reduced. Furthermore, the resulting image is clamped within the color space as described hereafter so that the system cannot accidentally produce CMYK colors which are not actually printable, even though they are correctly viewable on the color video display 4. There is thus this further advantage over the prior art system, such as shown in Figure 1 above.

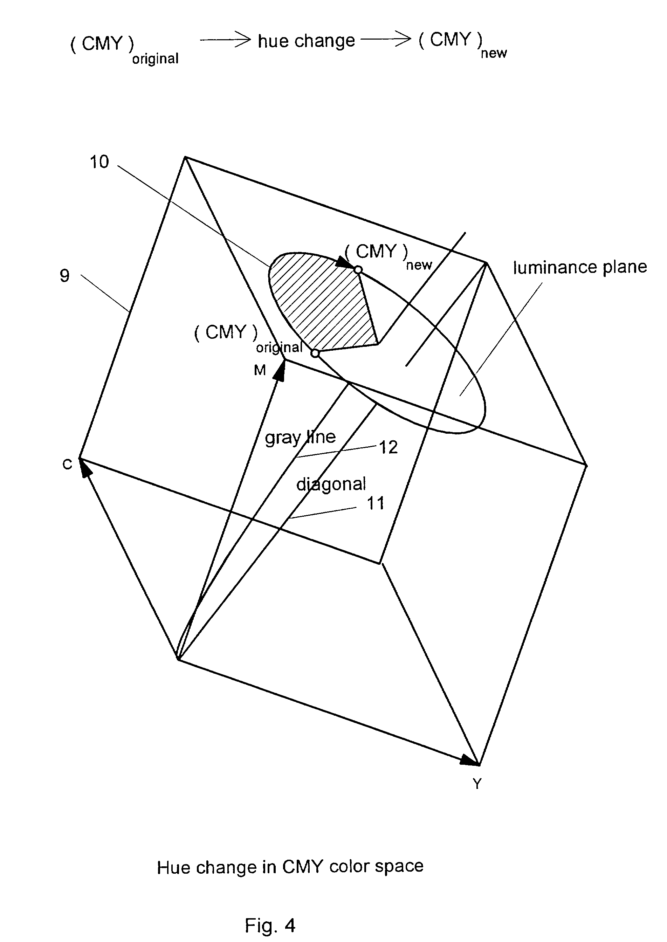

The specific mathematics involved in the CMY transformation 15 in Figure 3 will now be described for each of the corrections input in terms of hue, saturation, and luminance changes in the CMY transformation 15. In this regard, attention is directed to Figures 4, 5, and 6 hereafter.

**HUE CHANGE**

As shown in Figure 4, which shows hue change in a CMY color space 9, each hue change is applied directly to the CMY colors and is executed in the CMY color space. The original color rotates in its luminance plane (perpendicular to the color cube diagonal 11) around the intersection of this plane with the gray line 12 (the gray line is a line through the color space representing increasing luminance but with the absence of color):

$$(CMY)_{original} \Rightarrow \text{hue change} \Rightarrow (CMY)_{new}$$

A maximum desired hue change is described as: $-180° \leq$ CHANGE $\leq 180°$. Input data consists of: 1 ) the image as an array of pixels, with the $(CMY)_{original}$ color components being specified for each pixel; and 2) an optional weighting mask as an array of pixels, with a percentage of the maximum desired change specified for each pixel: $0 \leq$ d $\leq 100\%$ (for a global change d = 100%).

For each pixel of the image, the following five steps are carried out:

1. Two change coefficients are calculated according to the maximum desired hue change and an arbitrary function of the optional weight:

$$COEFF_1 = \cos[f(d)CHANGE] \text{ and } COEFF_2 = \frac{\sqrt{3}}{3} \sin[f(d)CHANGE]$$

2. The intersection of the color cube diagonal with a luminance plane perpendicular to it is calculated as:

$$D = 1/3(Y_{original} + M_{original} + C_{original})$$

3. The intersection of the gray line with a luminance plane is calculated as the empirically established function of the color cube diagonal intersection with the same plane:

$$Y_{gray} = f_y (D), M_{gray} = f_M (D) \text{ and } C_{gray} = f_c (D)$$

4. New color components (after the hue change) are calculated as:

$$Y_{new} = COEFF_1 (Y_{original} - Y_{Gray}) + COEFF_2 (M_{original} - M_{gray} - C_{original} + C_{gray}) + Y_{gray}$$

$$M_{new} = COEFF_1 (M_{original} - M_{gray}) + COEFF_2 (C_{original} - C_{gray} - Y_{original} + Y_{gray}) + M_{gray}$$

$$C_{new} = COEFF_1 (C_{original} - C_{gray}) + COEFF_2 (Y_{original} - Y_{gray} - M_{original} + M_{gray}) + C_{gray}$$

5. The new color components can be clamped between the color limits of the available CMY color space and/or are subjected to the saturation adjustment which preserves the desired hue and luminance values for $0 \leq C_{gray} \leq C_{max}$:

$$C_{new,corr} = COEFF (C_{new} - C_{gray}) + C_{gray}$$

$$M_{new,corr} = COEFF (M_{new} - M_{gray}) + M_{gray}$$

$$Y_{new,corr} = COEFF (Y_{new} - Y_{gray}) + Y_{gray}$$

where COEFF is the smallest of:

$$\frac{C_{limit} - C_{gray}}{C_{new} - C_{gray}}, \frac{M_{limit} - M_{gray}}{M_{new} - M_{gray}} \text{ and } \frac{Y_{limit} - Y_{gray}}{Y_{new} - Y_{gray}}$$

where
$COLOR_{limit} = 0$      for $COLOR_{new} < 0$
$COLOR_{limit} = COLOR_{max}$      for $COLOR_{new} > COLOR_{max}$
$COLOR_{limit} = COLOR_{new}$

**SATURATION CHANGE**

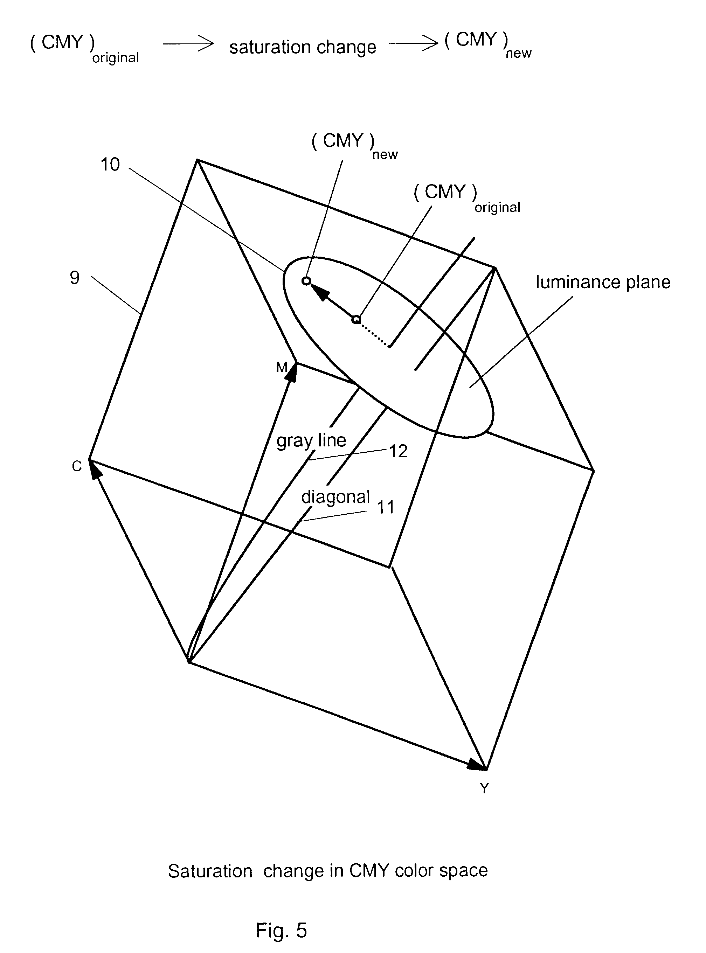

As shown in Figure 5, which shows saturation change in the CMY color space 9, a saturation change is applied directly to the CMY colors and is executed in the CMY color space 9. The original color moves along the line which connects this color to the intersection of its luminance plane 10 with the gray line 12. Decreases and increases in saturation are achieved by moving to and from this intersection, respectively:

$$(CMY)_{original} \Rightarrow \text{saturation change} \Rightarrow (CMY)_{new}$$

A maximum desired saturation change is described as a percentage of the actual saturation: $-1 \geq$ CHANGE $\geq 0$ for saturation decrease and $0 <$ CHANGE for saturation increase. Input data consists of: 1 ) the image as an array of pixels, with the $(CMY)_{original}$ color components being specified for each pixel; and 2) an optional weighting mask as an array of pixels, with a percentage of the maximum desired change specified for each pixel: $0 \leq d \leq 100\%$ (for a global change d = 100%).

For each pixel of the image, the following five steps are carried out:

1. The change coefficient is calculated according to the maximum desired saturation change and an arbitrary function of the optional weight:

$$COEFF = 1 + F(d) \, CHANGE$$

2. The intersection of the color cube diagonal with a luminance plane perpendicular to it is calculated as:

$$D = 1/3(Y_{original} + M_{original} + C_{original})$$

3. The intersection of the gray line with a luminance plane is calculated as the empirically established function of the color cube diagonal intersection with the same plane:

$$Y_{gray} = f_y(D), \; M_{gray} = f_M(D) \text{ and } C_{gray} = f_c(D)$$

4. New color components (after the saturation change) are calculated as:

$$Y_{new} = COEFF(Y_{original} - Y_{gray}) + Y_{gray}$$

$$M_{new} = COEFF(M_{original} - M_{gray}) + M_{gray}$$

$$C_{new} = COEFF(C_{original} - C_{gray}) + C_{gray}$$

5. The new color components can be clamped between the color limits of the available CMY color space and/or are subjected to the saturation adjustment which preserves the desired hue and luminance values for $0 \leq C_{gray} \leq C_{max}$:

$$C_{new,corr} = COEFF(C_{new} - C_{gray}) + C_{gray}$$

$$M_{new,corr} = COEFF(M_{new} - M_{gray}) + M_{gray}$$

$$Y_{new,corr} = COEFF(Y_{new} - Y_{gray}) + Y_{gray}$$

where COEFF is the smallest of:

$$\frac{C_{limit} - C_{gray}}{C_{new} - C_{gray}}, \frac{M_{limit} - M_{gray}}{M_{new} - M_{gray}} \text{ and } \frac{Y_{limit} - Y_{gray}}{Y_{new} - Y_{gray}}$$

where
$COLOR_{limit} = 0$      for $COLOR_{new} < 0$
$COLOR_{limit} = COLOR_{max}$      for $COLOR_{new} > COLOR_{max}$
$COLOR_{limit} = COLOR_{new}$

## LUMINANCE CHANGE

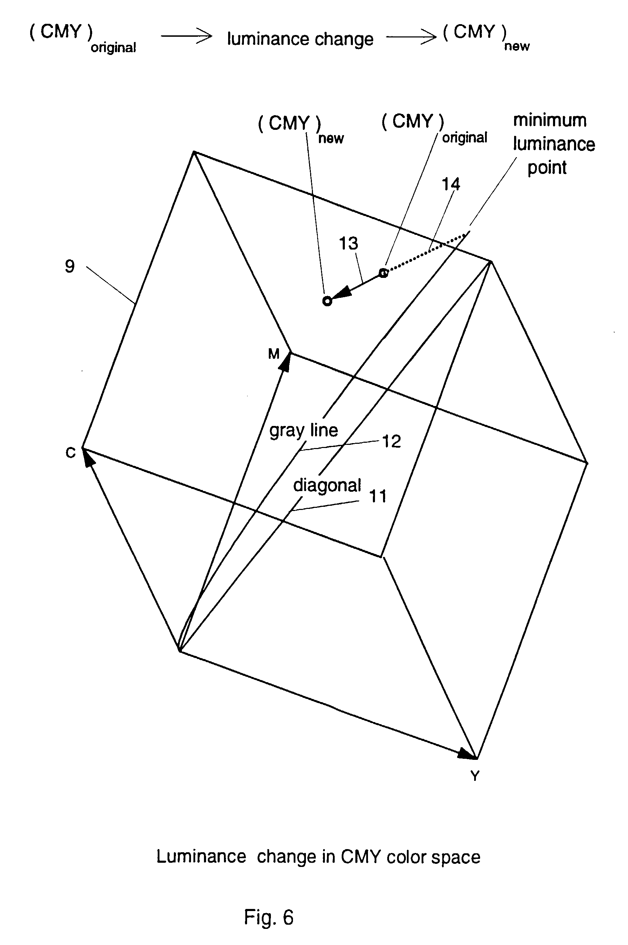

As illustrated in Figure 6, which shows luminance change in the CMY color space, each luminance change is applied directly to the CMY colors and is executed in the CMY color space. The original color moves along the line 13 which connects this color to the point of minimum luminance 14 on the gray line 12. Decreases and increases in luminance are achieved by moving to and from this point, respectively:

$$(CMY)_{original} \Rightarrow \text{luminance change.} \Rightarrow (CMY)_{new}$$

A maximum desired luminance change is described as a percentage of the actual luminance: $-1 \geq$ CHANGE $\geq 0$ for luminance decrease and $0 <$ CHANGE for luminance increase. Input data consists of: 1 ) the image as an array of pixels, with the $(CMY)_{original}$ color components being specified for each pixel; 2) an optional weighting mask as an array of pixels, with a percentage of the maximum desired change specified for each pixel: $0 \leq d \leq 100\%$ (for a global change d=100%).
For each pixel of the image, the following five steps are carried out:

1. The change coefficient is calculated according to the maximum desired luminance change and an arbitrary function of the optional weight:

$$COEFF = 1 + F(d) \text{ CHANGE}$$

2. The intersection of the color cube diagonal with the largest color luminance plane is calculated as:

$$D_{max} = 1/3(Y_{max} + M_{max} + C_{max})$$

3. The point of minimum luminance on the gray line is described as:

$$Y_{gray,max} = f_y(D_{max}), M_{gray,max} = f_M(D_{max}) \text{ and } C_{gray,max} = f_C(D_{max})$$

4. New color components (after the luminance change) are calculated as:

$$Y_{new} = COEFF(Y_{original} - Y_{gray, max}) + Y_{gray, max}$$

$$M_{new} = COEFF (M_{original} - M_{gray, max}) + M_{gray, max}$$

$$C_{new} = COEFF(C_{original} - C_{gray, max}) + C_{gray, max}$$

5. The new color components can be clamped between the color limits of the available CMY color space and/or subjected to the saturation adjustment which preserves the desired hue and luminance values for $0 \leq C_{gray} \leq C_{max}$:

$$C_{new,corr} = COEFF(C_{new} - C_{gray,\,new}) + C_{gray,\,new}$$

$$M_{new,corr} = COEFF(M_{new} - M_{gray,\,new}) + M_{gray,\,new}$$

$$Y_{new,corr} = COEFF(Y_{new} - Y_{gray,\,new}) + Y_{gray,\,new}$$

where COEFF is the smallest of:

$$\frac{C_{limit} - C_{gray}}{C_{new} - C_{gray}}, \frac{M_{limit} - M_{gray}}{M_{new} - M_{gray}} \text{ and } \frac{Y_{limit} - Y_{gray}}{Y_{new} - Y_{gray}}$$

where:
$COLOR_{limit} = 0$ for $COLOR_{new} < 0$
$COLOR_{limit} = COLOR_{max}$ for $COLOR_{new} > COLOR_{max}$
$COLOR_{limit} = COLOR_{new}$

The intersection of the color cube diagonal with the new color luminance plane is calculated as:

$$D_{new} = 1/3 \, (Y_{new} + M_{new} + C_{new})$$

The intersection of the gray line with the new color luminance plane is calculated as the empirically established function of the color cube diagonal intersection with the same plane:

$$Y_{gray,new} = f_y \, (D_{new}), \, M_{gray,new} - f_M(D_{new}) \text{ and } C_{gray,new} = f_c \, (D_{new})$$

## Claims

1. A method for introducing corrections in an original image represented by original CMYK printing colors, comprising the step of:
   providing original CMYK printing colors to be corrected; characterized by the steps of :
   defining desired corrections by corresponding HSL changes; and
   transforming the original CMY printing colors to new CMY printing colors by use of said HSL changes without a color space translation.

2. A method according to claim 1 wherein said transforming comprises the steps of:
   identifying in a printing color space of the original CMY printing colors a gray line defining luminance changes but with an absence of color, and executing said HSL changes with respect to said gray line.

3. A method according to claim 2 wherein the correction according to the H (hue) change is defined by a luminance plane perpendicular to a diagonal in said printing color space, and a circle centered about said gray line on said luminance plane, and an arc segment of said circle.

4. A method according to claim 2 wherein the correction according to the S (saturation) change is defined by a luminance plane perpendicular to a diagonal in said printing color space, and a circle centered about said gray line on said luminance plane, and a difference in radial distance along a radial line from said gray line towards a periphery of said circle.

5. A method according to claim 2 wherein the correction according to the L (luminance) change is defined by a difference in a distance along a line extending from a minimum luminance point at an end of said gray line towards an original CMY printing color.

6. A method according to claim 2 including the step of providing for said transforming a weighting mask which defines for each original CMY printing color an extent of color correction.

7. A method according to one of claims 1-6 wherein the HSL changes are clamped by limiting said new CMY printing colors to the range defined by the smallest and largest possible CMY values in said printing color space.

8. A method according to claim 7 wherein the clamped changes comprise a saturation adjustment which preserves desired hue and luminance values.

9. A method according to one of claims 1-8 including the step of transforming the original CMY printing colors to the new CMY printing colors by applying said HSL changes on a pixel-by-pixel basis.

10. A method according to one of claims 1-9 including the step of: converting said new CMY printing colors to RGB colors for a color video display.


**Patentansprüche**

1. Verfahren zum Einbringen von Korrekturen in ein Originalbild, das durch originale CMYK Druckfarben repräsentiert wird, bestehend aus dem Schritt:

   - Bereitstellen von originalen CMYK Druckfarben, die korrigiert werden sollen, gekennzeichnet durch die Schritte:
   - Definieren von gewünschten Korrekturen durch entsprechende HSL Änderungen; und
   - Transformieren der originalen CMY Druckfarben in neue CMY Druckfarben mittels der genannten HSL Änderungen ohne eine Farbraumtransformation.

2. Verfahren nach Anspruch 1, wobei das genannten Transformieren die Schritte umfaßt:

   - Identifizieren einer Graulinie in einem Farbraum der originalen CMY Druckfarben, die Luminanzänderungen mit der Abwesenheit von Farbe definiert, und
   - Ausführen der genannten HSL Änderungen mit Bezug auf die genannte Graulinie.

3. Verfahren nach Anspruch 2, wobei die Korrektur entsprechend der H (Farbton) Änderung definiert wird durch eine zu einer Diagonalen in dem genannten Druckfarbraum senkrechten Luminanzebene und einen um die genannte Graulinie auf der genannten Luminanzebene zentrierten Kreis und ein Bogensegment auf dem genannten Kreis.

4. Verfahren nach Anspruch 2, wobei die Korrektur entsprechend der S (Sättigung) Änderung definiert wird durch eine zu einer Diagonalen in dem genannten Druckfarbraum senkrechten Luminanzebene und einen um die genannte Graulinie auf der genannten Luminanzebene zentrierten Kreis und eine radiale Abstandsdifferenz entlang einer radialen Linie von der genannten Graulinie zu einer Peripherie des genannten Kreises.

5. Verfahren nach Anspruch 2, wobei die Korrektur entsprechend der L (Luminanz) Änderung definiert wird durch eine Abstandsdifferenz entlang einer Linie, die sich von einem Punkt minimaler Luminanz an einem Ende der genannten Graulinie zu einer originalen CMY Druckfarbe erstreckt.

6. Verfahren nach Anspruch 2, einschließlich des Schritts, für das genannte Transformieren eine Gewichtungsmaske bereitzustellen, die für jede originale CMY Druckfarbe ein Ausmaß der Farbkorrektur definiert.

7. Verfahren nach einem der Ansprüche 1 bis 6, wobei die HSL Änderungen begrenzt werden durch Begrenzen der genannten neuen CMY Druckfarben auf den Bereich, der durch die kleinsten und größten möglichen CMY Werte in dem genannten Druckfarbraum definiert ist.

8. Verfahren nach Anspruch 7, wobei die begrenzten Änderungen eine Sättigungsanpassung umfassen, die die gewünschten Farbton- und Luminanzwerte aufrechterhält.

9. Verfahren nach einem der Ansprüche 1 bis 8, einschließlich des Schritts, die originalen CMY Druckfarben in die neuen CMY Druckfarben zu transformieren, indem die genannten HSL Änderungen Bildpunkt für Bildpunkt angewendet werden.

10. Verfahren nach einem der Ansprüche 1 bis 9, einschließlich des Schritts, die genannten neuen CMY Druckfarben in RGB Farben für ein Farbvideodisplay umzuwandeln.

**Revendications**

1. Procédé pour introduire des corrections dans une image originale, représentée par des couleurs d'impression CMYK originales, selon lequel on fournit les couleurs d'impression CMYK originales à corriger, caractérisé en ce qu'

   - on définit les corrections souhaitées par des variations HSL correspondantes, et
   - on transforme les couleurs d'impression CMY originales en nouvelles couleurs d'impression CMY à l'aide de la variation HSL sans transformation de l'espace des couleurs.

2. Procédé selon la revendication 1, caractérisé en ce que la transformation comprend les étapes suivantes :

   - on identifie une ligne de gris dans un espace des couleurs d'impression CMY originales qui définit la variation de luminance en l'absence de couleur, et
   - on effectue les variations HSL en se référant à la ligne des gris.

3. Procédé selon la revendication 2, caractérisé en ce qu' on définit la correction selon la variation H (teinte) par un plan de luminance perpendiculaire à une diagonale dans l'espace des couleurs d'impression et un cercle, centré sur la ligne des gris dans le plan de luminance et un segment d'arc sur le cercle.

4. Procédé selon la revendication 2, caractérisé en ce qu' on définit la correction selon la variation S (saturation) par un plan de luminance perpendiculaire à une diagonale de l'espace des couleurs d'impression et d'un cercle centré autour de la ligne des gris dans le plan de luminance et une différence de distance radiale le long d'une ligne radiale de la ligne des gris à une périphérie du cercle.

5. Procédé selon la revendication 2, caractérisé en ce qu' on définit la correction selon la variation L (luminance) par une différence de distance le long d'une ligne qui s'étend d'un point de luminance minimale à une extrémité de la ligne des gris jusqu'à une couleur d'impression originale CMY.

6. Procédé selon la revendication 2, caractérisé en ce qu' il comprend une étape pour fournir un masque de pondération pour la transformation, qui définit une mesure de la correction de couleur pour chaque couleur d'impression originale CMY.

7. Procédé selon l'une quelconque des revendications 1 à 6, caractérisé en ce qu' on limite les variations HSL en limitant les nouvelles couleurs d'impression CMY à la plage définie par la plus petite et la plus grande valeurs CMY possibles dans l'espace des couleurs d'impression.

8. Procédé selon la revendication 7, caractérisé en ce que les variations limitées comprennent une adaptation de saturation qui maintient les valeurs souhaitées de teinte et de luminance.

9. Procédé selon l'une quelconque des revendications 1 à 8,

caractérisé en ce qu'
on transforme les couleurs d'impression CMY d'origine en de nouvelles couleurs d'impression CMY en appliquant les variations HSL point-image par point-image.

10. Procédé selon l'une quelconque des revendications 1 à 9,
caractérisé en ce qu'
on convertit les nouvelles couleurs d'impression CMY indiquées en couleur RGB pour un affichage vidéo en couleur.

EP 0 791 267 B1

FIG. 1 (PRIOR ART)

FIG. 2 (PRIOR ART)

# FIG. 3

CORRECTIONS BY
INPUTTING INDIVIDUAL
H, S, L, CHANGES          f(d)          PAPER TYPE

IMAGE
SCANNER

| C ORIG |
| M ORIG |
| Y ORIG |
| K ORIG |

1

CMY
TRANSFORMATION

15

C NEW
M NEW
Y NEW

COLOR
COMPUTER

16

R
G
B

COLOR
VIDEO
DISPLAY

4

EP 0 791 267 B1

$( CMY )_{original} \longrightarrow$ hue change $\longrightarrow ( CMY )_{new}$

Hue change in CMY color space

Fig. 4

$( \text{CMY} )_{\text{original}} \longrightarrow$ saturation change $\longrightarrow ( \text{CMY} )_{\text{new}}$

Saturation change in CMY color space

Fig. 5

$( CMY )_{original} \longrightarrow$ luminance change $\longrightarrow ( CMY )_{new}$

Luminance change in CMY color space

Fig. 6